# EUROPÄISCHE PATENTSCHRIFT

(11) **EP 2 447 117 B1**
(45) Veröffentlichungstag und Bekanntmachung des Hinweises auf die Patenterteilung: **29.05.2013**
(21) Anmeldenummer: 11007095.0
(22) Anmeldetag: 01.09.2011
(51) Int. Cl.: B60R 25/00, G07C 9/00

(54) **Verfahren zum Fernbetätigen eines Fahrzeugtürschlosses**
Method for remote actuation of a vehicle door lock
Procédé de commande à distance d'une serrure de porte de véhicule

(30) Priorität: 30.10.2010 DE 102010050230
(43) Veröffentlichungstag der Anmeldung: 02.05.2012
(73) Patentinhaber: Audi AG, 85045 Ingolstadt (DE)
(72) Erfinder: Sassmannshausen, Patrick, 85276 Hettershausen (DE); Geißenhöner, Martin, 85055 Ingolstadt (DE)

(56) Entgegenhaltungen:
- EP-A1- 0 937 844
- DE-A1-102006 027 040
- US-A1- 2006 279 411
- US-A1- 2009 051 488
- US-B1- 6 624 758

## Beschreibung

Verfahren zum Fernbetätigen eines Fahrzeugtürschlosses werden im Fahrzeugbau dazu verwendet, um einem Nutzer ein besonders einfaches und komfortables Ent- bzw. Verriegeln eines Fahrzeugtürschlosses, vorzugsweise aller am Fahrzeug verbauten Türschlösser gleichzeitig, zu ermöglichen.

Die US 6 624 758 B1 offenbart ein Verfahren zum Fernbetätigen eines Fahrzeugtürschlosses, aufweisend einen tragbaren Transponder, der mittels mindestens einer fahrzeugseitigen Antenne eine Funkverbindung, zur Übertragung eines der Steuerung des Fahrzeugtürschlosses dienenden Datentelegramms, mit einem Steuergerät zur Zugangskontrolle aufbauen kann, wobei für eine schlüssellose Zugangskontrolle eine erste Baudrate und für eine am Transponder auslösbare manuelle Zugangskontrolle eine zweite Baudrate verwendet wird.

Der Stand der Technik, wie er beispielsweise in der DE 10 2007 011 498 A1 gezeigt ist, beschreibt einen Transponder, der in Reichweite einer fahrzeugseitigen Antenne eine Funkverbindung mit eben dieser aufbauen kann, um ein Datentelegramm zur Identifikation und Autorisierung des Transponders mit einem Steuergerät auszutauschen. In Abhängigkeit vom Ergebnis der Identifikation schaltet das Steuergerät das Fahrzeugtürschloss. Die Funkverbindung kann einerseits der schlüssellosen Zugangskontrolle (keyless-entry / keyless-go) dienen, bei der der Nutzer, ohne den Transponder zu betätigen, sondern beispielsweise nur durch Ziehen am Türgriff, die so entriegelte Fahrzeugtür öffnen und umgekehrt auch wieder verschließen kann. Die meisten Transponder sehen andererseits aber auch die Möglichkeit vor durch eine am Transponder auslösbare manuelle Zugangskontrolle die Identifikation nutzergesteuert auszuführen. Während einer aktiven schlüssellosen Zugangskontrolle kann jedoch keine manuelle Zugangskontrolle ausgeführt werden, da für die Funkverbindung in der Regel nur eine Frequenz (433 bzw. 868 MHz) zur Verfügung steht. Dies führt dazu, dass die vom Nutzer ausgelöste manuelle Zugangskontrolle nicht durchgeführt werden kann oder bis zur regelmäßigen Beendigung der schlüssellosen Zugangskontrolle gewartet werden muss.

Es ist daher Aufgabe der vorliegenden Erfindung ein Verfahren zum Fernbetätigen eines Fahrzeugtürschlosses bereitzustellen, bei dem möglichst kurzfristig zwischen einer schlüssellosen und einer manuell auslösbaren Zugangskontrolle gewechselt werden kann.

Diese Aufgabe wird durch die Merkmale des Patentanspruchs 1 gelöst.

Ein Fahrzeug mit einem erfindungsgemäßen Verfahren wird in Patentanspruch 7 beansprucht.

Ein Verfahren zum Fernbetätigen eines Fahrzeugtürschlosses weist einen tragbaren Transponder auf, der mittels mindestens einer fahrzeugseitigen Antenne eine Funkverbindung, zur Übertragung eines der Steuerung des Fahrzeugtürschlosses dienenden Datentelegramms, mit einem Steuergerät zur Zugangskontrolle aufbauen kann, wobei für eine schlüssellose Zugangskontrolle eine erste Baudrate und für eine am Transponder auslösbare manuelle Zugangskontrolle eine zweite Baudrate verwendet wird und wobei beim Auslösen einer manuellen Zugangskontrolle während einer aktiven Funkverbindung zur schlüssellosen Zugangskontrolle ein Abbruchsignal vom Transponder ausgesendet wird, worauf sich das Steuergerät auf die zweite Baudrate umstellt.

Baud ist die Einheit für die Schrittgeschwindigkeit in der Nachrichtentechnik. Ein Baud ist die Geschwindigkeit, wenn ein Symbol pro Sekunde übertragen wird. Die Baudrate einer Datenübertragung muss auf Sende- und Empfangsseite gleich sein. Für die schlüssellose Zugangskontrolle wird eine erste Baudrate verwendet, die sich von der zweiten Baudrate zur manuellen Zugangskontrolle unterscheidet. Hat das Steuergerät zur Zugangskontrolle selbsttätig eine Funkverbindung zum Transponder über die mindestens eine fahrzeugseitige Antenne aufgebaut (schlüssellose Zugangskontrolle), dann werden Datentelegramme über diese Funkverbindung bei einer definierten Frequenz (meist 433 bzw. 868 MHz) mit der ersten Baudrate übertragen. Diese Datentelegramme müssen keine Anweisungen zur Steuerung des Fahrzeugtürschlosses enthalten, sondern können lediglich der Ortung oder Identifikation des Transponders dienen. Löst ein Nutzer während einer aktiven Funkverbindung zur schlüssellosen Zugangskontrolle eine manuelle Zugangskontrolle am Transponder aus, so sendet der Transponder ein Abbruchsignal, das das Steuergerät zu einer Umstellung von der ersten Baudrate auf die zweite Baudrate veranlasst. Dadurch ist das Steuergerät viel eher dazu bereit eine Funkverbindung zur manuellen Zugangskontrolle mit dem Transponder aufzubauen, insbesondere muss nicht auf eine regelmäßige Beendigung der schlüssellosen Zugangskontrolle gewartet werden. Das Datentelegramm dient der Identifikation und Autorisierung des Transponders. Weiterhin kann es Anweisungen zur Betätigung des Fahrzeugtürschlosses für das Steuergerät beinhalten. Das Datentelegramm kann auch aus mehreren einzelnen Datentelegrammen bestehen, die in einer Art Dialog zwischen Steuergerät und Transponder ausgetauscht werden.

In einer bevorzugten Ausführung sendet der Transponder, nach Aussenden des Abbruchsignals, das Datentelegramm aus. Wenn der Transponder direkt nach dem Absetzen des Abbruchsignals das Datentelegramm aussendet, kann die Wartezeit für den Nutzer bis zur Umsetzung seiner manuellen Eingaben am Transponder weiter verkürzt werden.

In einer bevorzugten Ausführung sendet der Transponder das Datentelegramm mindestens während eines Zeitintervalls, das das Steuergerät für die Umstellung von der ersten auf die zweite Baudrate benötigt. Wird das Datentelegramm vom Transponder mindestens so lange ausgesendet, wie das Steuergerät für die Umstellung von der ersten auf die zweite Baudrate braucht, wird sichergestellt, dass das Datentelegramm vom Steuergerät empfangen werden kann.

In einer alternativen bevorzugten Ausführung sendet der Transponder das Datentelegramm nach einem Zeitintervall, das das Steuergerät für die Umstellung von der ersten auf die zweite Baudrate benötigt. Wird das Datentelegramm vom Transponder erst ausgesendet, nachdem sich das Steuergerät von der ersten auf die zweite Baudrate umgestellt hat, erhöht sich die Wahrscheinlichkeit eines sicheren Empfangs des Datentelegramms vom Steuergerät und der Stromverbrauch des Transponders sinkt.

In einer bevorzugten Ausführung ist der Transponder als Schlüssel mit mindestens einer Taste ausgebildet. Ein solcher Transponder weist unter anderem einen mechanisch kodierten Schlüsselbart, sowie die zum Datenaustausch benötigten elektronischen Bauteile, wie Sender und Batterie, auf.

In einer bevorzugten Ausführung wird die manuelle Zugangskontrolle durch Betätigung einer der Tasten ausgelöst.

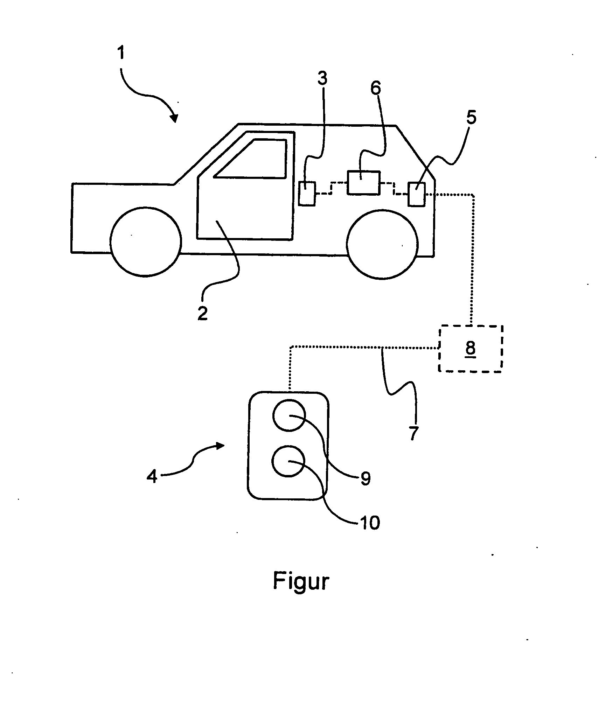

Weitere Einzelheiten und Vorteile der Erfindung ergeben sich aus der nachstehenden Beschreibung eines bevorzugten Ausführungsbeispiels unter Bezugnahme auf die Zeichnung.

Darin zeigt die Figur eine schematische Darstellung eines Fahrzeugs mit erfindungsgemäß fernbetätigbarem Fahrzeugtürschloss.

Gemäß der Figur hat ein Fahrzeug 1 mindestens eine Fahrzeugtür 2, die von einem Fahrzeugtürschloss 3 entriegelt oder verriegelt werden kann. Das Fahrzeugtürschloss 3 wird von einem Steuergerät zur Zugangskontrolle 6 geschaltet, das über eine fahrzeugseitige Antenne 5 eine Funkverbindung 7 mit einem tragbaren Transponder 4 aufnehmen kann. Über diese Funkverbindung 7 wird ein Datentelegramm 8 ausgetauscht, das der Identifikation des Transponders 4 dient und eine Funktionsanweisung an das Steuergerät 6 darstellt. Ist das Fahrzeugtürschloss 3 verriegelt und möchte ein Nutzer in das Innere des Fahrzeugs 1 gelangen, so erfolgt eine Entriegelung des Fahrzeugtürschlosses 3 durch das Steuergerät 6 nur, wenn die Identifikation des mitgeführten Transponders 4 erfolgreich war. Analog verhält es sich beim Verriegeln des Fahrzeugs 1. Eine schlüssellose Zugangskontrolle wird, ohne dass der Nutzer davon Kenntniss erlangt, selbsttätig mit einer ersten Baudrate über die Funkverbindung 7 durchgeführt, wenn dieser in Reichweite der Antenne 5 ist. Betätigt der Nutzer hingegen eine auf dem Transponder 4 angeordnete Taste 9 oder 10, so wird eine manuelle Zugangskontrolle mit einer zweiten Baudrate über die Funkverbindung 7 durchgeführt. Die Taste 9 kann beispielsweise die Verriegelung und die Taste 10 die Entriegelung des Fahrzeugtürschlosses 3 veranlassen oder umgekehrt. Wird während einer aktiven schlüssellosen Zugangskontrolle eine manuelle Zugangskontrolle ausgelöst, so sendet der Transponder 4 ein Abbruchsignal über die Funkverbindung 7 an das Steuergerät 6, welches sich daraufhin von der ersten auf die zweite Baudrate umstellt. Dem Abbruchsignal folgt ein Datentelegramm 8 zur Identifikation des Transponders 4, welches vom Transponder 4 mindestens so lange ausgesendet wird, bis das Steuergerät 6 auf die zweite Baudrate umgestellt ist.

### Liste der Bezugszeichen:

- 1: Fahrzeug
- 2: Fahrzeugtür
- 3: Fahrzeugtürschloss
- 4: Transponder
- 5: Antenne
- 6: Steuergerät zur Zugangskontrolle
- 7: Funkverbindung
- 8: Datentelegramm
- 9: Taste
- 10: Taste

## Patentansprüche

1. Verfahren zum Fernbetätigen eines Fahrzeugtürschlosses (3), aufweisend einen tragbaren Transponder (4), der mittels mindestens einer fahrzeugseitigen Antenne (5) eine Funkverbindung (7), zur Übertragung eines der Steuerung des Fahrzeugtürschlosses (3) dienenden Datentelegramms (8), mit einem Steuergerät zur Zugangskontrolle (6) aufbauen kann, wobei für eine schlüssellose Zugangskontrolle eine erste Baudrate und für eine am Transponder (4) auslösbare manuelle Zugangskontrolle eine zweite Baudrate verwendet wird, **dadurch gekennzeichnet, dass** beim Auslösen einer manuellen Zugangskontrolle während einer aktiven Funkverbindung (7) zur schlüssellosen Zugangskontrolle ein Abbruchsignal vom Transponder (4) ausgesendet wird, worauf sich das Steuergerät (6) auf die zweite Baudrate umstellt.

2. Verfahren nach Anspruch 1, **dadurch gekennzeichnet, dass** der Transponder (4), nach Aussenden des Abbruchsignals, das Datentelegramm (8) aussendet.

3. Verfahren nach Anspruch 2, **dadurch gekennzeichnet, dass** der Transponder (4) das Datentelegramm (8) mindestens während eines Zeitintervalls, das das Steuergerät (6) für die Umstellung von der ersten auf die zweite Baudrate benötigt, sendet.

4. Verfahren nach Anspruch 2, **dadurch gekennzeichnet, dass** der Transponder (4) das Datentelegramm (8) nach einem Zeitintervall, das das Steuergerät (6) für die Umstellung von der ersten auf die zweite Baudrate benötigt, sendet.

5. Verfahren zum Fernbetätigen eines Fahrzeugtürschlosses nach einem der Ansprüche 1 bis 4, **dadurch gekennzeichnet, dass** der Transponder (4) als Schlüssel mit mindestens einer Taste (9, 10) ausgebildet ist.

6. Verfahren zum Fernbetätigen eines Fahrzeugtürschlosses nach Anspruch 5, **dadurch gekennzeichnet, dass** die manuelle Zugangskontrolle durch Betätigung einer der Tasten (9, 10) ausgelöst wird.

7. Fahrzeug (1) mit mindestens einem Fahrzeugtürschloss (3), das mit einem Verfahren nach Anspruch 1 fernbetätigt wird.

## Claims

1. Method for remote actuation of a vehicle door lock (3), comprising a portable transponder (4) which, by means of at least vehicle-side antenna (5), can set up a radio link (7), for transmitting a data telegram (8) used to control the vehicle door lock (3), to a control device for access control (6), a first baud rate being used for keyless access control and a second baud rate being used for manual access control which can be triggered at the transponder (4), **characterised in that**, when manual access control is triggered during an active radio link (7) for keyless access control, a termination signal is emitted by the transponder (4), whereupon the control device (6) switches to the second baud rate.

2. Method according to claim 1, **characterised in that** the transponder (4) emits the data telegram (8) after emission of the termination signal.

3. Method according to claim 2, **characterised in that** the transponder (4) sends the data telegram (8) at least during a time interval which the control device (6) requires for switching from the first to the second baud rate.

4. Method according to claim 2, **characterised in that** the transponder (4) sends the data telegram (8) after a time interval which the control device (6) requires for switching from the first to the second baud rate.

5. Method for remote actuation of a vehicle door lock according to any of claims 1 to 4, **characterised in that** the transponder (4) is designed as a key comprising at least one button (9, 10).

6. Method for remote actuation of a vehicle door lock according to claim 5, **characterised in that** the manual access control is triggered by actuating one of the buttons (9, 10).

7. Vehicle (1) comprising at least one vehicle door lock (3) which is actuated remotely by a method according to claim 1.

## Revendications

1. Procédé de commande à distance d'une serrure de porte de véhicule (3), comportant un transpondeur portable (4) qui, au moyen d'au moins une antenne (5) côté véhicule, peut établir une liaison par radio (7) avec un appareil de commande (6) destiné au contrôle d'accès afin de transmettre un télégramme de données (8) servant à la commande de la serrure de porte de véhicule (3), un premier débit en bauds étant utilisé pour un contrôle d'accès sans clé et un second débit en bauds étant utilisé pour un contrôle d'accès manuel pouvant être déclenché sur le transpondeur (4), **caractérisé en ce que**, lors du déclenchement d'un contrôle d'accès manuel pendant une liaison par radio active (7) pour le contrôle d'accès sans clé, le transpondeur (4) émet un signal d'interruption à la suite duquel l'appareil de commande (6) bascule sur le second débit en bauds.

2. Procédé selon la revendication 1, **caractérisé en ce que**, après l'émission du signal d'interruption, le transpondeur (4) émet le télégramme de données (8).

3. Procédé selon la revendication 2, **caractérisé en ce que** le transpondeur (4) émet le télégramme de données (8) au moins pendant un intervalle de temps dont a besoin l'appareil de commande (6) pour le basculement du premier débit en bauds au second débit en bauds.

4. Procédé selon la revendication 2, **caractérisé en ce que** le transpondeur (4) émet le télégramme de données (8) après un intervalle de temps dont a besoin l'appareil de commande (6) pour le basculement du premier débit en bauds au second débit en bauds.

5. Procédé de commande à distance d'une serrure de porte de véhicule selon l'une des revendications 1 à 4, **caractérisé en ce que** le transpondeur (4) est conçu comme une clé avec au moins une touche (9, 10).

6. Procédé de commande à distance d'une serrure de porte de véhicule selon la revendication 5, **caractérisé en ce que** le contrôle d'accès manuel est déclenché par l'actionnement de l'une des touches (9, 10).

7. Véhicule (1) avec au moins une serrure de porte de véhicule (3) qui est commandée à distance avec un procédé selon la revendication 1.
